# EUROPEAN PATENT APPLICATION

(11) **EP 4 447 308 A1**
(43) Date of publication of application: **16.10.2024**
(21) Application number: 23746943.2
(22) Date of filing: 24.01.2023
(51) Int. Cl.: H02P 25/22, H02P 27/06

(54) **ELECTRIC MACHINE SYSTEM AND CONTROLLER**

(30) Priority: 28.01.2022 JP 2022011552
(71) Applicant: IHI Corporation, Tokyo 135-8710 (JP)
(72) Inventor: YAMAGUCHI Koji, Tokyo 135-8710 (JP); JIKUMARU Takehiro, Tokyo 135-8710 (JP); KATSURA Kenshiro, Tokyo 135-8710 (JP); YAMAMOTO Tomoya, Tokyo 135-8710 (JP)
(74) Representative: TBK
(86) International application number: PCT/JP2023/002111
(87) International publication number: WO 2023/145732

(57) **Abstract**

An electric machine system includes an electric machine and a controller. The electric machine includes a stator including a first winding set and a second winding set, and a rotator that includes a magnet and is rotatable with respect to the stator. The controller controls input and output of a first voltage with respect to the first winding set, and input and output of a second voltage with respect to the second winding set. The controller includes an output unit and a setting unit. The output unit outputs a first signal for the input and output of the first voltage, and a second signal for the input and output of the second voltage. The setting unit sets a phase difference between the first signal and the second signal. The setting unit changes the phase difference in correspondence with a variation of the magnitude of at least one of a first current flowing through the first winding set, and a second current flowing through the second winding set.

## Description

### Technical Field

The present disclosure relates to an electric machine system and a controller.

### Background Art

Patent Literature 1 discloses an electric motor including a plurality of winding sets disposed in a common stator. In the electric motor described in Patent Literature 1, each of a plurality of microcomputers controls an operation of a switching element of an electric motor drive circuit to perform control with respect to a voltage that is input to each of the winding sets.

### Citation List

### Patent Literature

Patent Literature 1: International Publication WO 2018/012420

### Summary of Invention

### Technical Problem

In the electric machine described above, in a case where phases of voltages input to the winding sets match each other, so-called current ripples of currents flowing through the winding sets strengthen each other, and as a result, a torque ripple or a DC voltage ripple (hereinafter, simply referred to as "ripple") may be generated. In this case, there is a concern that the performance of the electric machine may deteriorate. On the other hand, it is considered that phases of voltages input to the winding sets are shifted so that the current ripples of currents flowing through the winding sets weaken each other. However, when the phases of the voltages are excessively shifted, for example, the magnitude of a current flowing through one winding set continuously increases, and thus the magnitude of a current flowing through another winding set may change from increasing to decreasing. As a result, inductance of the windings may appear small due to the influence of mutual inductance, and this may cause an overcurrent to flow. In this case, there is a concern that the performance of the electric machine may deteriorate.

The present disclosure describes an electric machine system and a controller capable of suppressing deterioration of the performance of an electric machine.

### Solution to Problem

According an aspect of the present disclosure, there is provided an electric machine system including: an electric machine including a stator including a first winding set and a second winding set, and a rotator that includes a magnet and is rotatable with respect to the stator; and a controller configured to control input and output of a first voltage with respect to the first winding set, and input and output of a second voltage with respect to the second winding set. The controller includes an output unit configured to output a first signal for the input and output of the first voltage, and a second signal for the input and output of the second voltage, and a setting unit configured to set a phase difference between the first signal and the second signal. The setting unit changes the phase difference in correspondence with a variation of the magnitude of at least one of a first current flowing through the first winding set, and a second current flowing through the second winding set.

According to another aspect of the present disclosure, there is provided a controller configured to control input and output of a first voltage with respect to a first winding set and input and output of a second voltage with respect to a second winding set. The controller includes: an output unit configured to output a first signal for input and output of the first voltage, and a second signal for input and output of the second voltage; and a setting unit configured to set a phase difference between the first signal and the second signal. The setting unit changes the phase difference in correspondence with a variation of the magnitude of at least one of a first current flowing through the first winding set, and a second current flowing through the second winding set.

### Effects of Invention

According to the present disclosure, it is possible to provide an electric machine system and a controller capable of suppressing deterioration of the performance of an electric machine.

### Brief Description of Drawings

FIG. 1 is a configuration diagram of an electric machine system according to a first embodiment.
FIG. 2 is a view illustrating a specific example of an electric machine illustrated in FIG. 1.
FIG. 3 is a view illustrating a first signal and a second signal.
FIG. 4 is a view illustrating a phase difference between the first signal and the second signal in a case where a pulse width of the first signal and a pulse width of the second signal varied.
FIG. 5 is a view illustrating a first signal, a second signal, and a phase difference of an electric machine system according to a comparative example.
FIG. 6 is a view illustrating a current ripple of the electric machine system according to the comparative example.
FIG. 7 is a view illustrating control of a phase difference in an electric machine system according to a second embodiment.
FIG. 8 is a view illustrating the control of the phase difference in the electric machine system according to the second embodiment.
FIG. 9 is a view illustrating the control of the phase difference in the electric machine system according to the second embodiment.
FIG. 10 is a view illustrating the control of the phase difference in the electric machine system according to the second embodiment.
FIG. 11 is a view illustrating the control of the phase difference in the electric machine system according to the second embodiment.
FIG. 12 is a view illustrating the control of the phase difference in the electric machine system according to the second embodiment.

### Description of Embodiments

An electric machine system according to an aspect of the present disclosure includes: an electric machine including a stator including a first winding set and a second winding set, and a rotator that includes a magnet and is rotatable with respect to the stator; and a controller configured to control input and output of a first voltage with respect to the first winding set, and input and output of a second voltage with respect to the second winding set. The controller includes an output unit configured to output a first signal for the input and output of the first voltage, and a second signal for the input and output of the second voltage, and a setting unit configured to set a phase difference between the first signal and the second signal. The setting unit changes the phase difference in correspondence with a variation of the magnitude of at least one of a first current flowing through the first winding set, and a second current flowing through the second winding set.

In the electric machine system, the output unit of the controller outputs the first signal for input and output of the first voltage with respect to the first winding set, and the second signal for input and output of the second voltage with respect to the second winding set. In addition, the setting unit of the controller sets the phase difference between the first signal and the second signal. According to this, it is possible to suppress a ripple caused when the first current flowing through the first winding set and the second current flowing through the second winding set strengthen each other. For example, when the magnitude of the current increases, the ripple also tends to increase. In a case where the magnitude of the current has increased, the ripple can be suppressed by enlarging the phase difference. However, when the phase difference is excessively increased, there is a concern that an overcurrent may be generated. Here, the setting unit changes the phase difference between the first signal and the second signal in correspondence with a variation of the magnitude of at least one of the first current and the second current. According to this, it is possible to suppress the ripple while suppressing generation of the overcurrent caused when the phase difference is excessively increased. As a result, according to the electric machine system, it is possible to suppress deterioration of the performance of the electric machine.

The first signal and the second signal may be pulse signals, the magnitude of the first current varies in correspondence with a proportion occupied by a pulse width of the first signal in a total pulse period of the first signal, the magnitude of the second current may vary in correspondence with a proportion occupied by a pulse width of the second signal in a total pulse period of the second signal, and the setting unit may change the phase difference in correspondence with the variation of at least one of the pulse width of the first signal and the pulse width of the second signal. According to this, the phase difference can be changed by using the pulse width without directly using the current.

The setting unit may set the phase difference so that a width of a non-overlapping region that does not overlap a pulse of the second signal in a pulse of the first signal does not become larger than a predetermined permissible value. As the width of the non-overlapping region increases, there is a tendency that the overcurrent is likely to be generated. According to the configuration described above, it is possible to suppress generation of the overcurrent.

The permissible value may be obtained by multiplying a value, which is obtained by dividing a difference between a maximum repetitive peak collector current and a rated current of a transistor forming a power converter connected to the electric machine by a difference between a power source voltage and an induced voltage, by leakage inductance between the first winding set and the second winding set. According to this, the permissible value can be readily obtained.

A difference between the pulse width of the first signal and the pulse width of the second signal may be equal to or less than the permissible value. According to this, the width of the non-overlapping region is prevented from being larger than the permissible value.

In a case where each of the pulse width of the first signal and the pulse width of the second signal is a half pulse period, the setting unit may set the phase difference so that the phase difference does not become the half pulse period. According to this, the width of the non-overlapping region is prevented from being larger than the permissible value.

The setting unit may set the phase difference so that the phase difference becomes larger than the permissible value, and does not become a value smaller than the difference between the total pulse period of the first signal and the permissible value in a case where the pulse width of the first signal is larger than the permissible value, and is smaller than a difference between the total pulse period of the first signal and the permissible value. According to this, the width of the non-overlapping region is prevented from being larger than the permissible value.

The setting unit may set the phase difference to a half pulse period in a case where a pulse interval of the second signal is equal to or less than the permissible value. In this case, since the width of the non-overlapping region does not become larger than the permissible value, even when the overcurrent has been generated, the overcurrent is within a permissible range. Accordingly, it is possible to suppress the ripple by maximizing the phase difference.

The setting unit may set the phase difference to a half pulse period in a case where the pulse width of the first signal is equal to or more than a difference between the total pulse period and the permissible value. In this case, since the width of the non-overlapping region does not become larger than the permissible value, even when the overcurrent has been generated, the overcurrent is within a permissible range. Accordingly, it is possible to suppress the ripple by maximizing the phase difference.

The setting unit may set the phase difference to a half pulse period in a case where the pulse width of the first signal is equal to or less than the permissible value. In this case, since the width of the non-overlapping region does not become larger than the permissible value, even when the overcurrent has been generated, the overcurrent is within a permissible range. Accordingly, it is possible to suppress the ripple by maximizing the phase difference.

The proportion occupied by the pulse width of the first signal in the total pulse period of the first signal and the proportion occupied by the pulse width of the second signal in the total pulse period of the second signal may be the same as each other. According to this, since a relationship between the first signal and the second signal is simplified, it is possible to readily realize suppression of the ripple and suppression of generation of the overcurrent.

The setting unit may not change the phase difference in correspondence with a change in the pulse width of the first signal in a case where the pulse width of the first signal is within a first range. According to this, it is possible to set the phase difference flexibly in correspondence with various situations.

The first range may include the half pulse period. According to this, it is possible to set the phase difference flexibly in correspondence with various situations.

The setting unit may increase the phase difference in correspondence with an increase in the pulse width of the first signal in a case where the pulse width of the first signal is within a second range, and may decrease the phase difference in correspondence with an increase in the pulse width of the first signal in a case where the pulse width of the first signal is within a third range. According to this, it is possible to set the phase difference flexibly in correspondence with various situations.

The setting unit may rapidly increase the phase difference in correspondence with an increase in the pulse width of the first signal in a case where the pulse width of the first signal is within the second range. According to this, it is possible to set the phase difference flexibly in correspondence with various situations.

The setting unit may change the phase difference so that an increase rate of the phase difference becomes a maximum value in a case where the pulse width of the first signal is within the second range. According to this, it is possible to set the phase difference flexibly in correspondence with various situations.

A controller according to another aspect of the present disclosure is a controller configured to control input and output of a first voltage with respect to a first winding set and input and output of a second voltage with respect to a second winding set. The controller includes: an output unit configured to output a first signal for input and output of the first voltage, and a second signal for input and output of the second voltage; and a setting unit configured to set a phase difference between the first signal and the second signal. The setting unit changes the phase difference in correspondence with a variation of the magnitude of at least one of a first current flowing through the first winding set, and a second current flowing through the second winding set.

According to the controller, as described above, it is possible to suppress the ripple while suppressing generation of the overcurrent. As a result, according to the controller, it is possible to suppress deterioration of the performance of the electric machine.

Hereinafter, embodiments of the present disclosure will be described in detail with reference to the accompanying drawings. Note that, in the drawings, the same reference numeral will be given the same or equivalent portions, and redundant description will be omitted.

### [First Embodiment]

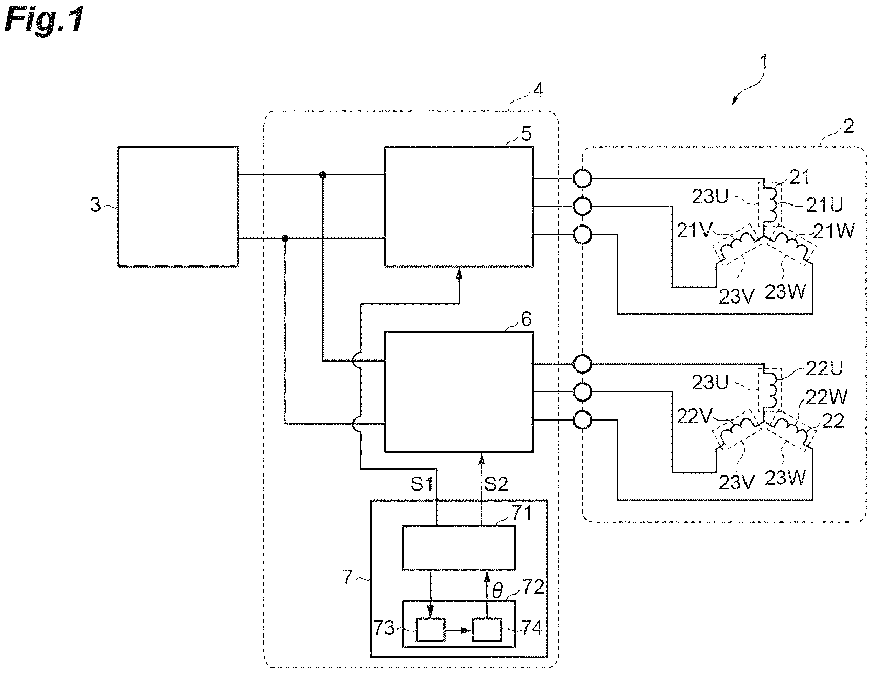

A first embodiment will be described. As illustrated in FIG. 1, an electric machine system 1 of the first embodiment includes an electric machine 2, a power source 3, and a drive device 4. For example, the electric machine system 1 is applied to an electric compressor, an electric blower, a vehicle (movable body), or the like. The electric machine 2 is an electric motor. The electric machine 2 is, for example, a three-phase AC electric motor. The electric machine 2 includes a stator (electric motor stator), and a rotator (electric motor rotator) that is rotatable with respect to the stator. The rotator includes a shaft, and a permanent magnet that is provided in the shaft. The stator surrounds the rotator in a peripheral direction.

The stator includes a plurality of teeth 23U, 23V, and 23W, a first winding set 21, and a second winding set 22. The first winding set 21 is provided in each of the three sets of teeth 23U, 23V, and 23W arranged at a predetermined interval in a peripheral direction. Specifically, the first winding set 21 includes a plurality of windings 21U, 21V, and 21W. The winding 21U is provided in the tooth 23U. The winding 21V is provided in the tooth 23V. The winding 21W is provided in the tooth 23W. The second winding set 22 is provided in the teeth 23U, 23V, and 23W where the first winding set 21 is provided. Specifically, the second winding set 22 includes a plurality of windings 22U, 22V, and 22W. The winding 22U is provided in the tooth 23U. The winding 22V is provided in the tooth 23V. The winding 22W is provided in the tooth 23W.

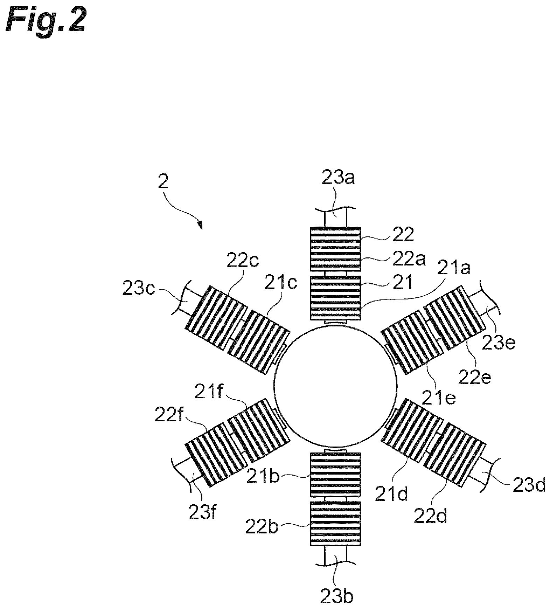

A specific example of the electric machine illustrated in FIG. 1 will be described with reference to FIG. 2. As illustrated in FIG. 2, the stator of the electric machine 2 includes a plurality of teeth 23a, 23b, 23c, 23d, 23e, and 23f. Each of the teeth 23a, 23b, 23c, 23d, 23e, and 23f are arranged in a peripheral direction at intervals of 60 degrees. The first winding set 21 is provided in each of the teeth 23a, 23b, 23c, 23d, 23e, and 23f. Specifically, the first winding set 21 includes a plurality of windings 21a, 21b, 21c, 21d, 21e, and 21f. The winding 21a is provided in the tooth 23a. The winding 21b is provided in the tooth 23b. The winding 21c is provided in the tooth 23c. The winding 21d is provided in the tooth 23d. The winding 21e is provided in the tooth 23e. The winding 21f is provided in the tooth 23f. The second winding set 22 is provided in each of the teeth 23a, 23b, 23c, 23d, 23e, and 23f. Specifically, the second winding set 22 includes a plurality of windings 22a, 22b, 22c, 22d, 22e, and 22f. The winding 22a is provided in the tooth 23a. The winding 22b is provided in the tooth 23b. The winding 22c is provided in the tooth 23c. The winding 22d is provided in the tooth 23d. The winding 22e is provided in the tooth 23e. The winding 22f is provided in the tooth 23f. In this embodiment, the windings 21a, 21b, 21c, 21d, 21e, and 21f is located on a base end side of the teeth 23a, 23b, 23c, 23d, 23e, and 23f as compared with the windings 22a, 22b, 22c, 22d, 22e, and 22f. However, an attachment position of the windings with respect to the teeth is an example, and can be appropriately changed. For example, the windings 21a, 21b, 21c, 21d, 21e, and 21f may be located on a tip end side of the teeth 23a, 23b, 23c, 23d, 23e, and 23f as compared with the windings 22a, 22b, 22c, 22d, 22e, and 22f. Note that, when the electric machine 2 is the three-phase AC electric motor, the electric machine 2 may be provided with 3×n (n is a natural number) sets of teeth.

When a current flows through the first winding set 21 and the second winding set 22, a magnetic field is generated in the stator. A force in the peripheral direction operates on the rotator due to the magnetic field, and as a result thereof, torque is applied to the rotator. The rotator rotates due to an operation of the torque. The power source 3 is, for example, a DC power source. The power source 3 is, for example, a storage battery.

As illustrated in FIG. 1, the drive device 4 includes a first power converter 5, a second power converter 6, and a controller 7. The first power converter 5 is connected to the first winding set 21 and the power source 3. The first power converter 5 inputs electric power output from the power source 3 to the first winding set 21. That is, the electric power output from the power source 3 is input to the first winding set 21 through the first power converter 5. The first power converter 5 functions as an inverter. The first power converter 5 converts DC power output from the power source 3 into AC power. The first power converter 5 inputs the AC power to the first winding set 21. The first power converter 5 includes, for example, a switch circuit. The switch circuit includes, for example, a semiconductor switch such as MOSFET and IGBT. The first power converter 5 supplies the AC power to the first winding set 21, for example, by a PWM control method.

The second power converter 6 has the same configuration and function as in the first power converter 5. That is, the second power converter 6 is connected to the second winding set 22 and the power source 3. The second power converter 6 inputs electric power output from the power source 3 to the second winding set 22. That is, the electric power output from the power source 3 is input to the second winding set 22 through the second power converter 6. The second power converter 6 functions as an inverter. The second power converter 6 converts DC power output from the power source 3 into AC power. The second power converter 6 inputs the AC power to the second winding set 22. The second power converter 6 includes, for example, a switch circuit. The switch circuit includes, for example, a semiconductor switch such as MOSFET and IGBT. The second power converter 6 supplies the AC power to the second winding set 22, for example, by a PWM control method.

The controller 7 is a computer device including, for example, a processor (for example, a CPU and the like), and a memory (for example, a ROM, a RAM, and the like). The controller 7 controls the operation of the first power converter 5 and the second power converter 6 to control input of a first voltage to the first winding set 21, and input of a second voltage to the second winding set 22. Specifically, the controller 7 includes an output unit 71 and a setting unit 72 as functional configurations.

The output unit 71 outputs a first signal S1 for inputting the first voltage to the first power converter 5. The first power converter 5 converts a DC voltage into an AC voltage in correspondence with the first signal S1, and inputs the AC voltage to the first winding set 21 as the first voltage. Note that, input timing of the first voltage to the first winding set 21 matches timing at which the first signal S1 is output to the first power converter 5.

The output unit 71 outputs a second signal S2 for inputting the second voltage to the second power converter 6. The second power converter 6 converts a DC voltage to an AC voltage in correspondence with the second signal S2, and inputs the AC voltage to the second winding set 22 as the second voltage. Note that, input timing of the second voltage to the second winding set 22 matches timing at which the second signal S2 is output to the second power converter 6.

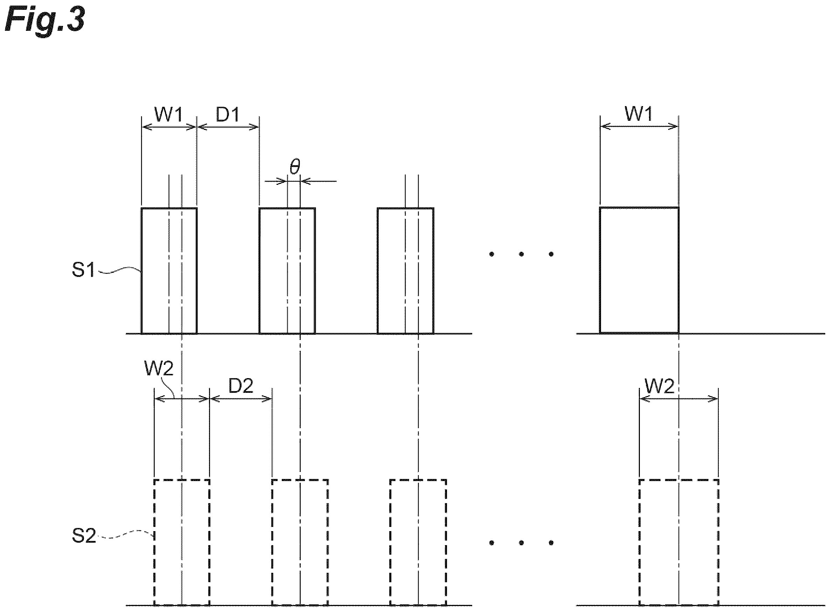

As illustrated in FIG. 3, the first signal S1 and the second signal S2 are pulse signals, respectively. Each of the first signal S1 and the second signal S2 is, for example, a PWM control signal. The first power converter 5 applies a voltage to the first winding set 21 while the first signal S1 is ON, and does not apply a voltage to the first winding set 21 while the first signal S1 is OFF. The first power converter 5 repeats this operation to input an AC voltage to the first winding set 21. The second power converter 6 applies a voltage to the second winding set 22 while the second signal S2 is ON, and does not apply a voltage to the second winding set 22 while the second signal S2 is OFF. The second power converter 6 repeats this operation to input an AC voltage to the second winding set 22.

The magnitude of the first current flowing through the first winding set 21 varies in correspondence with a proportion (first duty ratio) occupied by a pulse width W1 of the first signal S1 in a total pulse period (one period) of the first signal S1. A first duty ratio of the first signal S1 is a value (W1/(W1 + D1)) obtained by dividing the pulse width W1 of the first signal S1 by the sum of the pulse width W1 and a pulse interval D1 of the first signal S1. As the first duty ratio increases, that is, time for which a voltage is applied to the first winding set 21 is longer, the magnitude of the first current flowing through the first winding set 21 increases.

The magnitude of the second current flowing through the second winding set 22 varies in correspondence with a proportion (second duty ratio) occupied by a pulse width W2 of the second signal S2 in a total pulse period (one period) of the second signal S2. A second duty ratio of the second signal S2 is a value (W2/(W2 + D2)) obtained by dividing the pulse width W2 of the second signal S2 by the sum of the pulse width W2 and a pulse interval D2 of the second signal S2. As the second duty ratio increases, that is, time for which a voltage is applied to the second winding set 22 is longer, the magnitude of the second current flowing through the second winding set 22 increases. Hereinafter, one period of a signal, that is, a sum of one pulse width and one pulse interval of the signal is set to 360 degrees.

In this embodiment, the pulse width W1 of the first signal S1 and the pulse width W2 of the second signal S2 are the same as each other, and the pulse interval D1 of the first signal S1 and the pulse interval D2 of the second signal S2 are the same as each other. That is, in this embodiment, the first duty ratio of the first signal S 1 and the second duty ratio of the second signal S2 are the same as each other.

The setting unit 72 sets a phase difference θ between the first signal S1 and the second signal S2. The phase difference represents an angular difference in phase between the first signal and the second signal. As an example, the phase difference θ is an angular difference between the center of the pulse of the first signal S1 and the center of the pulse of the second signal S2. The phase difference may be a time difference in phase between the first signal and the second signal. As an example, the phase difference θ is a time difference between the center of the pulse of the first signal S1 and the center of the pulse of the second signal S2.

The angular difference in phase between the first signal and the second signal is a value obtained by multiplying a value, which is obtained by dividing the time difference in phase between the first signal and the second signal by a period corresponding to a total pulse period of the first signal or the second signal, by 2π. For example, in a case where a value obtained by dividing a time difference between the center of one pulse of the first signal S1, and the center of one pulse corresponding to the one pulse of the first signal in the second signal S2 by a period corresponding to the total pulse period of the first signal S1 is 1/4, the phase difference θ is π/2 (that is, 90 degrees). Note that, in a case where the pulse width W1 of the first signal S1 and the pulse width W2 of the second signal S2 are the same as each other, the phase difference θ may be an angular difference or a time difference between timing at which a pulse of the first signal S1 rises and timing at which a pulse of the second signal S2 rises.

The setting unit 72 changes the phase difference θ in correspondence with a variation of the magnitude of a variation of the first current flowing through the first winding set 21 and the second current flowing through the second winding set 22. When the magnitude of the current increases, a current ripple also tends to increase, and thus when the magnitude of the current increases, the phase difference θ is also set to be increased. As an example, the setting unit 72 changes the phase difference θ in correspondence with the variation of the pulse width W1 of the first signal S1 and the pulse width W2 of the second signal S2. Specifically, the setting unit 72 increases the phase difference θ when the pulse width W1 of the first signal S1 and the pulse width W2 of the second signal S2 increase, and decreases the phase difference θ when the pulse width W1 of the first signal S1 and the pulse width W2 of the second signal S2 decrease. In this embodiment, the pulse width W1 and the pulse width W2 are average values of predetermined periods. That is, the pulse width W1 and the pulse width W2 are average values of a plurality of periods of pulse signals.

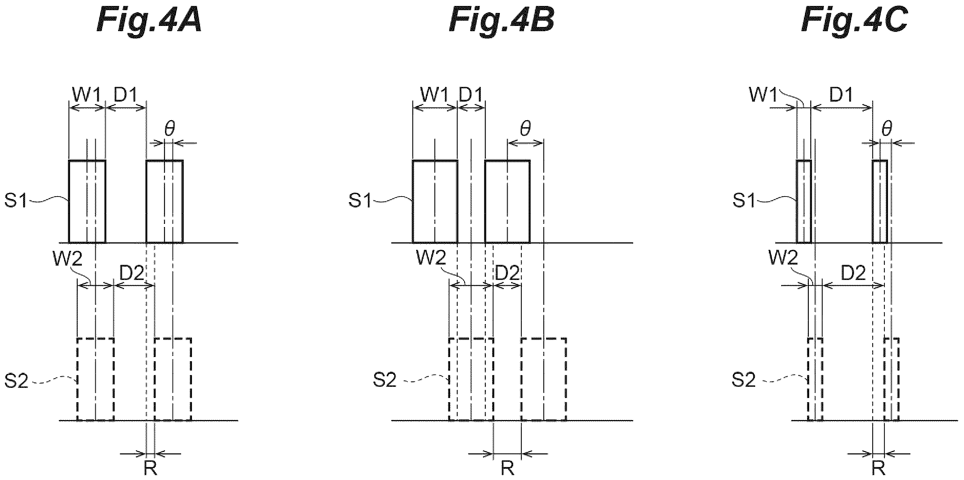

As illustrated in FIG. 4, the setting unit 72 sets the phase difference θ so that a width R of a non-overlapping region that does not overlap a pulse of the second signal S2 in a pulse of the first signal S1 does not become larger than a predetermined permissible value. In this embodiment, in one pulse of the first signal S1, a region that does not overlap a pulse of the second signal S2 is referred to as the non-overlapping region.

A permissible value relating to the width R of the non-overlapping region is determined by a permissible current value of the electric machine system 1, a voltage of the power source 3, and the like. Specifically, the permissible value is obtained by multiplying a value, which is obtained by dividing a difference between a maximum repetitive peak collector current and a rated current of a transistor constituting the first power converter 5 or the second power converter 6 by a difference between a power source voltage and an induced voltage, by leakage inductance between the first winding set and the second winding set. The maximum repetitive peak collector current corresponds to a peak collector current of a semiconductor component that is electrically connected to the first winding set 21 or the second winding set 22. The maximum repetitive peak collector current may be acquired from a data sheet of the semiconductor component, or the like. Note that, the maximum repetitive peak collector current may be multiplied by, for example, 0.8 in consideration of a general safety factor.

The permissible value relating to the width R of the non-overlapping region may be determined by a permissible temperature of the semiconductor component, or the like. Specifically, a difference between the permissible temperature and an environmental temperature during operation needs to be larger than a value obtained by multiplying a thermal resistance value of the semiconductor component by a permissible loss. Here, the permissible loss is a parameter depending on a current, and may be acquired from a data sheet or the like. The permissible value may be obtained by dividing a value, which is obtained by multiplying a difference between a current value corresponding to the permissible loss and a current during operation by leakage inductance between the first winding set and the second winding set, by a difference between a power source voltage and an induced voltage. The permissible value relating to the width R of the non-overlapping region is a value representing a limit at which respective components constituting the electric machine system 1 fail due to an overcurrent. In other words, the setting unit 72 sets the phase difference θ so that the respective components constituting the electric machine system 1 do not fail due to the overcurrent.

In the non-overlapping region, the second signal S2 is switched from ON to OFF while the first signal S1 is ON. That is, power supply to the second winding set 22 is cut off and a current starts to decrease while a voltage is being input to the first winding set 21. Accordingly, an overcurrent may be generated in the first winding set 21 due to an influence of mutual inductance. As the width R of the non-overlapping region is larger, the overcurrent that is generated in the first winding set 21 tends to further increase. A maximum value of the width R of the non-overlapping region is the pulse interval D2 in a case where the pulse width W1 of the first signal S1 is larger than the pulse interval D2 of the second signal S2, and is the pulse width W1 in a case where the pulse width W1 of the first signal S1 is equal to or less than the pulse interval D2 of the second signal S2.

As illustrated in FIG. 4A, a case where each of the pulse width W1 of the first signal S1 and the pulse interval D2 of the second signal S2 is larger than the permissible value relating to the width R of the non-overlapping region is assumed. In this case, the width R of the non-overlapping region may be larger than the permissible value. As an example, it is assumed that the pulse width W1 of the first signal S1 is 180 degrees, the pulse interval D2 of the second signal S2 is 180 degrees, and the permissible value is 60 degrees. As the phase difference θ increases, since the width R of the non-overlapping region may increase up to 180 degrees as a maximum value, the width R of the non-overlapping region may be larger than 60 degrees. Accordingly, the setting unit 72 sets the phase difference θ so that the width R of the non-overlapping region does not become larger than the permissible value.

As illustrated in FIG. 4B, a case where the pulse interval D2 of the second signal S2 is equal to or less than the permissible value relating to the width R of the non-overlapping region is assumed. In this case, the width R of the non-overlapping region may not be larger than the permissible value. As an example, it is assumed that the pulse width W1 of the first signal S1 is 324 degrees, the pulse interval D2 of the second signal S2 is 36 degrees, and the permissible value is 60 degrees. Even when the phase difference θ increases, since the width R of the non-overlapping region can increase up to 36 degrees at most, the width R of the non-overlapping region cannot be larger than 60 degrees. Accordingly, in a case where the pulse interval D2 of the second signal S2 is equal to or less than the permissible value relating to the width R of the non-overlapping region, there is no limitation to the phase difference θ. In a case where the pulse interval D2 of the second signal S2 is equal to or less than the permissible value relating to the width R of the non-overlapping region, the setting unit 72 can set the phase difference θ to 180 degrees (half pulse period).

As illustrated in FIG. 4C, a case where the pulse width W1 of the first signal S1 is equal to or less than the permissible value relating to the width R of the non-overlapping region is assumed. In this case, the width R of the non-overlapping region cannot be larger than the permissible value. As an example, it is assumed that the pulse width W1 of the first signal S1 is 36 degrees, the pulse interval D2 of the second signal S2 is 324 degrees, and the permissible value is 60 degrees. Even when the phase difference θ increases, since the width R of the non-overlapping region can increase up to 36 degrees at most, the width R of the non-overlapping region cannot be larger than 60 degrees. Accordingly, in a case where the pulse width W1 of the first signal S1 is equal to or less than the permissible value relating to the width R of the non-overlapping region, there is no limitation to the phase difference θ. In a case where the pulse width W1 of the first signal S1 is equal to or less than the permissible value relating to the width R of the non-overlapping region, the setting unit 72 can set the phase difference θ to 180 degrees (half pulse period).

The setting unit 72 outputs a signal relating to the phase difference θ to the output unit 71. The output unit 71 provides the phase difference θ to the first signal S1 output from the first power converter 5, and outputs the second signal S2 to the second power converter 6.

As illustrated in FIG. 1, the setting unit 72 includes a determination unit 73 and a calculation unit 74. The determination unit 73 receives information relating to the pulse width W1 of the first signal S1, the pulse interval D1 of the first signal S1, the pulse width W2 of the second signal S2, and the pulse interval D2 of the second signal S2 from the output unit 71. The determination unit 73 determines whether there is a possibility that the width R of the non-overlapping region may be larger than the permissible value on the basis of these pieces of information. The calculation unit 74 receives information relating to the determination result from the determination unit 73. In a case where there is no possibility that the width R of the non-overlapping region may be larger than the permissible value, the calculation unit 74 outputs a signal relating to 180 degrees as the phase difference θ to the output unit 71. In a case where there is a possibility that the width R of the non-overlapping region may be larger than the permissible value, the calculation unit 74 calculates the phase difference θ so that the width R of the non-overlapping region does not become larger than the permissible value.

As described above, in the electric machine system 1, the output unit 71 of the controller 7 outputs the first signal S1 for input and output of a first voltage with respect to the first winding set 21, and outputs the second signal S2 for input and output of a second voltage with respect to the second winding set 22. Furthermore, the setting unit 72 of the controller 7 sets the phase difference θ between the first signal S1 and the second signal S2. According to this, it is possible to suppress a ripple caused when the first current flowing through the first winding set 21 and the second current flowing through the second winding set 22 strengthen each other. For example, when the magnitude of a current increases, a current ripple between the first current and the second current also increases, and as a result, a torque ripple also tends to increase. The ripple can be suppressed by increasing the phase difference θ. However, when the phase difference θ excessively increases, there is a concern that an overcurrent may be generated. Here, the setting unit 72 changes the phase difference θ between the first signal S1 and the second signal S2 in correspondence with a variation of the magnitude of the first current and the second current. According to this, it is possible to suppress the ripple while suppressing generation of the overcurrent caused when the phase difference θ is excessively increased. As a result, according to the electric machine system 1, it is possible to suppress deterioration of the performance of the electric machine 2.

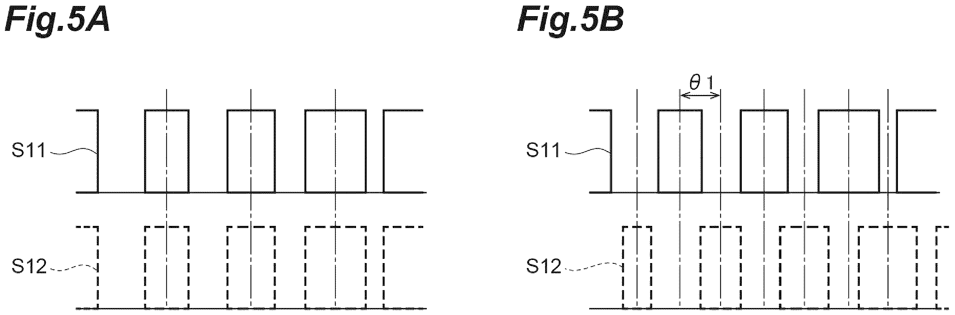

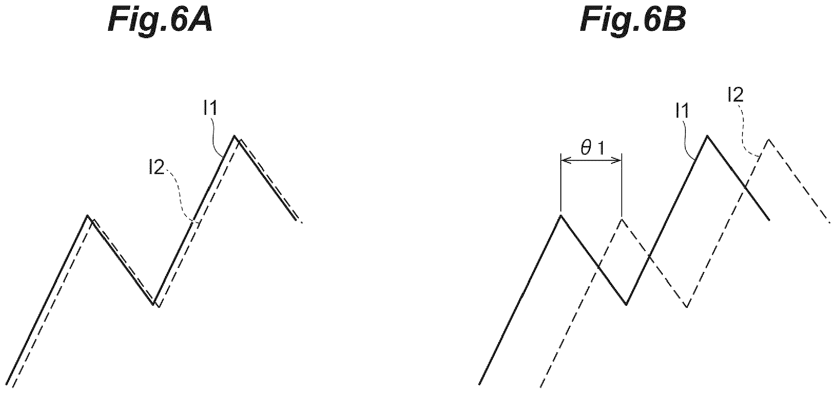

FIG. 5 is a view illustrating a phase difference between a first signal and a second signal of an electric machine system according to a comparative example. FIG. 6 is a view illustrating a current ripple of the electric machine system according to the comparative example. As illustrated in FIG. 5A and FIG. 6A, in a case where phases of a first signal S11 and a second signal S12 of the comparative example match each other, phases of a current ripple of a first current I1 and a current ripple of a second current I2 match each other, and phases of a torque ripple due to the first current I1 and a torque ripple due to the second current I2 match each other. As a result, a total torque ripple increases. In addition, there is a concern that a DC voltage ripple and a DC side current ripple also increase. As illustrated in FIG. 5B and 6B, in a case where a phase difference θ1 between the first signal S11 and the second signal S12 of the comparative example is, for example, 180 degrees, phases of the current ripple of the first current I1 and the current ripple of the second current I2 deviate from each other by 180°, and thus torque ripples generated by the current ripple of the first current I1 and the current ripple of the second current I2 cancel each other. As a result, the total torque ripple is suppressed. However, in this case, for example, input of electric power to a first winding set may be stopped while electric power is inputting to a second winding set. In this case, the magnitude of the second current I2 may rapidly increase due to an influence of mutual inductance, and as a result, an overcurrent is generated in the second winding set. Therefore, there is a concern that deterioration or damage of components may occur.

In other words, the first winding set and the second winding set magnetically interfere each other. Therefore, for example, when a state in which two winding sets are simultaneously excited by a power source transitions to a state in which a command for one power converter is OFF, the other power converter grasps that load inductance becomes extremely small due to a counter electromotive force of the other winding set. In this case, a second current flowing through the other winding set rapidly increases, and a risk in which an overcurrent such as a short-circuit current flows occurs in the other winding set. In a case where a width of a non-overlapping region becomes 180 degrees, it is considered that there is the highest possibility that the overcurrent is generated. According to the electric machine system 1, as described above, it is possible to suppress the ripple while suppressing generation of the overcurrent, and it is possible to suppress deterioration of the performance of the electric machine 2.

Each of the first signal S1 and the second signal S2 is a pulse signal. The magnitude of the first current varies in correspondence with the proportion (first duty ratio) occupied by the pulse width W1 of the first signal S1 in the total pulse period of the first signal S1. The magnitude of the second current varies in correspondence with the proportion (second duty ratio) occupied by the pulse width W2 of the second signal S2 in the total pulse period of the second signal S2. The setting unit 72 changes the phase difference θ in correspondence with the variation of the pulse width of the first signal S1 and the pulse width of the second signal S2. According to this, the phase difference θ can be changed by using the pulse width without directly using the current.

The setting unit 72 sets the phase difference θ so that the width R of the non-overlapping region that does not overlap the pulse of the second signal S2 in the pulse of the first signal S1 does not become larger than the predetermined permissible value. As the width R of the non-overlapping region increases, there is a tendency that the overcurrent is likely to be generated. According to the configuration described above, it is possible to suppress generation of the overcurrent.

The permissible value is obtained by multiplying a value, which is obtained by dividing a difference between a maximum repetitive peak collector current and a rated current of a transistor forming the first power converter 5 or the second power converter 6 by a difference between a power source voltage and an induced voltage, by leakage inductance between the first winding set and the second winding set. According to this, the permissible value can be readily obtained.

In a case where the pulse interval D2 of the second signal S2 is equal to or less than the permissible value, the setting unit 72 sets the phase difference θ to 180 degrees. In this case, since the width R of the non-overlapping region does not become larger than the permissible value, even when the overcurrent has been generated, the overcurrent is within a permissible range. Accordingly, it is possible to suppress the ripple by maximizing the phase difference θ.

In a case where the pulse width W1 of the first signal S1 is equal to or less than the permissible value relating to the width R of the non-overlapping region, the setting unit 72 sets the phase difference θ to 180 degrees. In this case, the width R of the non-overlapping region does not become larger than the permissible value, even when the overcurrent has been generated, the overcurrent is within a permissible range. Accordingly, it is possible to suppress the ripple by maximizing the phase difference θ.

The proportion (first duty ratio) occupied by the pulse width W1 of the first signal S1 in the total pulse period of the first signal S1, and the proportion (second duty ratio) occupied by the pulse width W2 of the second signal S2 in the total pulse period of the second signal S2 are the same as each other. According to this, since a relationship between the first signal S1 and the second signal S2 is simplified, it is possible to readily realize suppression of the ripple and suppression of generation of the overcurrent.

According to the controller 7, as described above, it is possible to suppress the ripple while suppressing generation of the overcurrent. Accordingly, according to the controller 7, it is possible to suppress deterioration of the performance of the electric machine 2.

### [Second Embodiment]

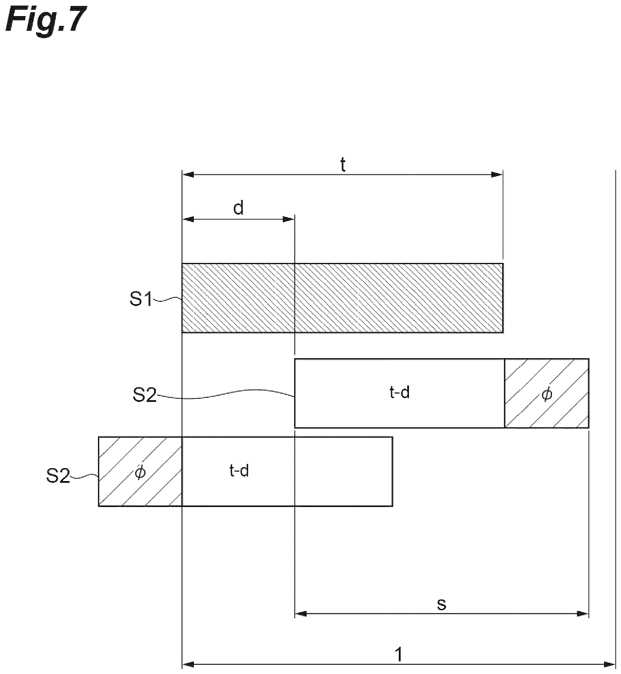

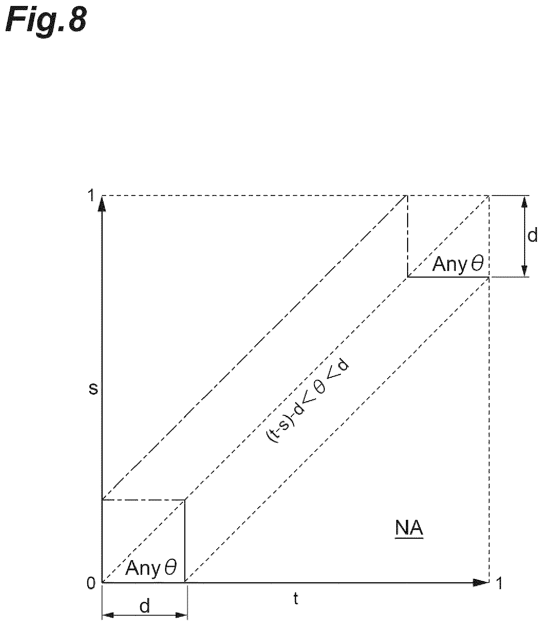

A second embodiment will be described. As illustrated in FIG. 7 and FIG. 8, in this embodiment, it is assumed that the total pulse period is "1", the half pulse period is "1/2", the pulse width of the first signal S1 is "t", the pulse width of the second signal S2 is "s", and the permissible value relating to the width R of the non-overlapping region is "d". First, it is assumed that a relationship of t > s is satisfied.

There is a case of a relationship of t < d. In this case, the width R of the non-overlapping region is equal to or less than the permissible value d regardless of the phase difference θ (lower left Any θ region illustrated in FIG. 8). Accordingly, in a case of a relationship of t ≤ d, the setting unit 72 can set the phase difference θ to 1/2 (half pulse period).

There is a case of a relationship of (t - s) > d. In this case, the width R of the non-overlapping region becomes larger than the permissible value d regardless of the phase difference θ (NA region illustrated in FIG. 8). Accordingly, in this embodiment, the control is performed so that a relationship of (t - s) ≤ d is satisfied.

There is a case of relationships of (t - s) < d and (t + d) > 1. In this case, the width R of the non-overlapping region becomes equal to or less than the permissible value d regardless of the phase difference θ (upper right Any θ region illustrated in FIG. 8). Accordingly, in a case where relationships of (t - s) < d and (t + d) > 1 are satisfied, the setting unit 72 can set the phase difference θ to 1/2.

There is a case of relationships of (t - s) < d and (t + d) ≤ 1. In this case, when a relationship of -φ ≤ θ ≤ d is satisfied, the width R of the non-overlapping region becomes equal to or less than the permissible value d. φ is s - (t - d). Accordingly, in a case where the relationships of (t - s) < d and (t + d) ≤ 1 are satisfied, the setting unit 72 sets the phase difference θ to satisfy the relationship of -φ ≤ θ ≤ d.

There is a case of a relationship of t > d. In this case, when the phase difference θ satisfies a relationship of -φ ≤ θ ≤ d, the width R of the non-overlapping region becomes equal to or less than the permissible value d. φ is s - (t - d). Accordingly, in a case where the relationship of t > d is satisfied, the setting unit 72 sets the phase difference θ to satisfy the relationship of -φ ≤ θ ≤ d. However, in a case where a relationship of s + d ≥ 1 is satisfied, since the width R of the non-overlapping region becomes equal to or less than the permissible value d, the phase difference θ can be any value. Accordingly, in a case where the relationships of t > d and s + d ≥ 1 are satisfied, the setting unit 72 can set the phase difference θ to 1/2.

Note that, when assuming a relationship of t < s, the relationship becomes opposite to the relationship in the case of assumption as t > s. In a case of the relationship of t < s, the setting unit 72 may set the phase difference θ to satisfy a relationship of (s - t) - d ≤ (1 - θ) ≤ d.

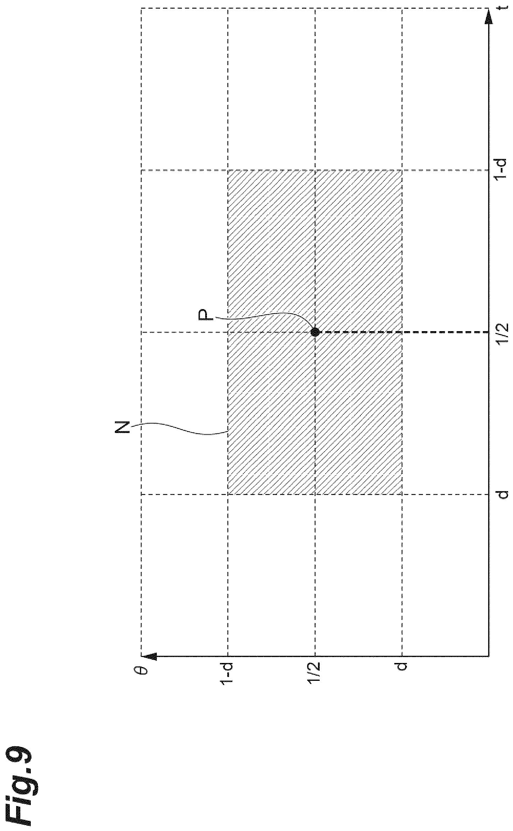

Next, as an example, there is a case of t = s. As illustrated in FIG. 9, in a case where t is 1/2, the setting unit 72 sets the phase difference θ so that θ does not become 1/2. That is, the setting unit 72 sets the phase difference θ to avoid a point P where t is 1/2 and θ is 1/2. In a case where a relationship of d < t < (1 - d) is satisfied, the setting unit 72 sets the phase difference θ so that the phase difference θ does not become a value satisfying the relationship of d < θ < (1 - d). That is, the setting unit 72 sets the phase difference θ to avoid a predetermined region N including the point P. In this embodiment, the region N is a region satisfying a relationship of d < t < (1 - d) (first range R1) and a relationship of d < θ < (1 - d).

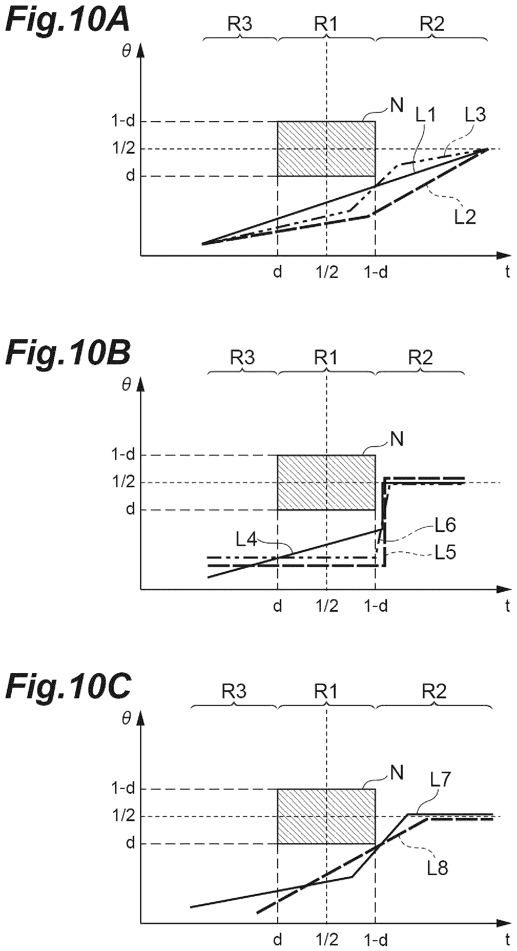

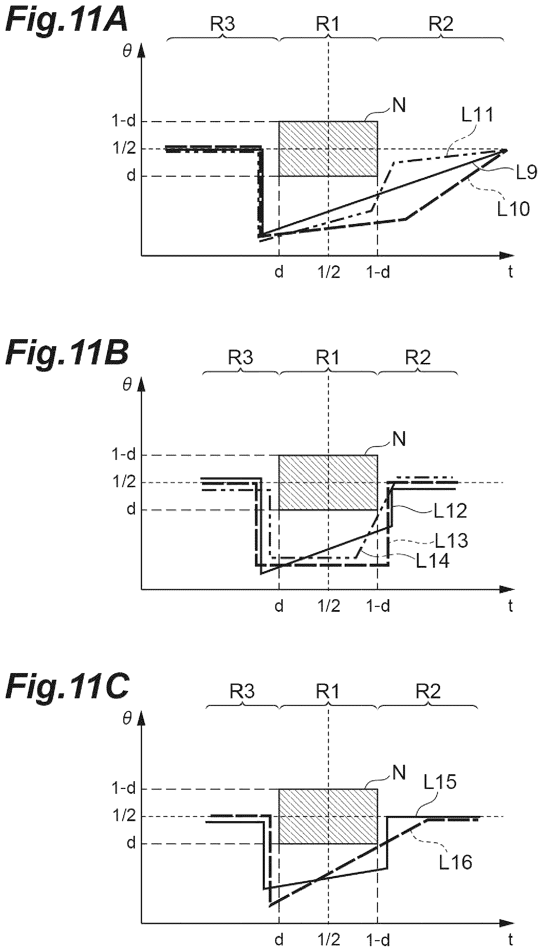

As illustrated in FIG. 10 and FIG. 11, the setting unit 72 changes the phase difference θ in correspondence with a variation of a pulse width t (first duty ratio) of the first signal S1 in a region other than the region N. As illustrated in FIG. 10, the setting unit 72 may increase the phase difference θ in correspondence with an increase in the pulse width t.

As illustrated in FIG. 10A, the setting unit 72 may constantly maintain a variation rate of the phase difference θ (line L1). The setting unit 72 may make a variation rate of the phase difference θ in a relationship of t ≥ (1 - d) larger than a variation rate of the phase difference θ in a relationship of t < (1 - d) (line L2). The setting unit 72 may make a variation rate of the phase difference θ in other regions smaller than a variation rate of the phase difference θ in a range before and after "t = (1 - d)" (line L3).

As illustrated in FIG. 10B, the setting unit 72 may increase the phase difference θ in correspondence with an increase in the pulse width t in the relationship of t < (1 - d), and may maintain the phase difference θ at 1/2 in the relationship of t ≥ (1 - d) (line L4). That is, in a case of the relationship of t ≥ (1 - d) (second range R2), the setting unit 72 may set the phase difference θ to 1/2. The setting unit 72 may change the phase difference θ so that an increase rate of the phase difference θ becomes a maximum value in the relationship of t ≥ (1 - d). The setting unit 72 may rapidly increase the phase difference θ in correspondence with the increase in the pulse width t in the relationship of t ≥ (1 - d) (line L4).

"Rapid" represents that an absolute value of the variation rate of the phase difference θ which accompanies the variation of the pulse width t is larger than a predetermined value. In this embodiment, the absolute value of the variation rate of the phase difference θ in the relationship of t ≥ (1 - d) is, for example, infinite. That is, the phase difference θ varies from a predetermined value to 1/2 at a predetermined time within the range of t ≥ (1 - d).

The setting unit 72 may not change the phase difference θ in correspondence with the variation of the pulse width t in a relationship of d < t < (1 - d) (first range R1) (line L5). The first range R1 includes 1/2. That is, a relationship of d < 1/2 < (1 - d) is satisfied. The setting unit 72 may gradually increase the phase difference θ up to 1/2 in the relationship of t ≥ (1 - d) (line L6).

As illustrated in FIG. 10C, the setting unit 72 may maintain the phase difference θ at 1/2 after increasing the phase difference θ to 1/2 in correspondence with an increase in the pulse width t (line L7). The setting unit 72 may make the variation rate of the phase difference θ in other ranges smaller than the variation rate of the phase difference θ in a range before and after "t = (1 - d)" (line L7). The setting unit 72 may increase the phase difference θ up to 1/2 in correspondence with an increase in the pulse width t as in the line L1, and then may maintain the phase difference θ at 1/2 (line L8).

As illustrated in FIG. 11, the setting unit 72 may increase the phase difference θ in correspondence with an increase in the pulse width t in the relationship of t ≥ (1 - d), and may decrease the phase difference θ in correspondence with an increase in the pulse width t in a relationship of t ≤ d (third range R3). As illustrated in FIG. 11A, the setting unit 72 may decrease the phase difference θ from 1/2 in correspondence with an increase in the pulse width t in the relationship of t ≤ d, and then may constantly maintain the variation rate of the phase difference θ in a relationship of t > d as in the line L1 (line L9).

The setting unit 72 may decrease the phase difference θ from 1/2 in correspondence with an increase in the pulse width t in the relationship of t ≤ d, and then may make the variation rate of the phase difference θ in the relationship of t ≥ (1 - d) larger than the variation rate of the phase difference θ in the relationship of t < (1 - d) in a case of the relationship of t > d (line L10). The setting unit 72 may decrease the phase difference θ from 1/2 in correspondence with an increase in the pulse width t in the relationship of t ≤ d, and then may make the variation rate of the phase difference θ in other ranges smaller than the variation rate of the phase difference θ in a range of before and after "t = (1 - d)" as in the line L3 (line L11).

As illustrated in FIG. 11B, the setting unit 72 may decrease the phase difference θ from 1/2 in correspondence with an increase in the pulse width t in the relationship of t ≤ d, may increase the phase difference θ in correspondence with an increase in the pulse width t in the relationship of t > d as in the line L4, and then may maintain the phase difference θ at 1/2 (line L12). The setting unit 72 may decrease the phase difference θ from 1/2 in correspondence with an increase in the pulse width t in the relationship of t ≤ d, and then may not change the phase difference θ in correspondence with the variation of the pulse width t in the relationship of d < t < (1 - d) as in the line L5 (line L13). The setting unit 72 may decrease the phase difference θ from 1/2 in correspondence with an increase in the pulse width t in the relationship of t ≤ d, and then may gradually increase the phase difference θ up to 1/2 in the relationship of t > d as in L6 (line L14).

As illustrated in FIG. 11C, the setting unit 72 may decrease the phase difference θ from 1/2 in correspondence with an increase in the pulse width t in the relationship of t ≤ d, may increase the phase difference θ in correspondence with an increase in the pulse width t in a relationship of t ≥ d as in the line L4, and may maintain the phase difference θ at 1/2 (line L15). The setting unit 72 may decrease the phase difference θ from 1/2 in correspondence with an increase in the pulse width t in the relationship of t ≤ d, may increase the phase difference θ up to 1/2 in correspondence with an increase in the pulse width t in the relationship of t > d as in the line L8, and may maintain the phase difference θ at 1/2 (line L16).

As illustrated in FIGS. 11A to 11C, the setting unit 72 may rapidly decrease the phase difference θ in correspondence with an increase in the pulse width t in the relationship of t ≤ d.

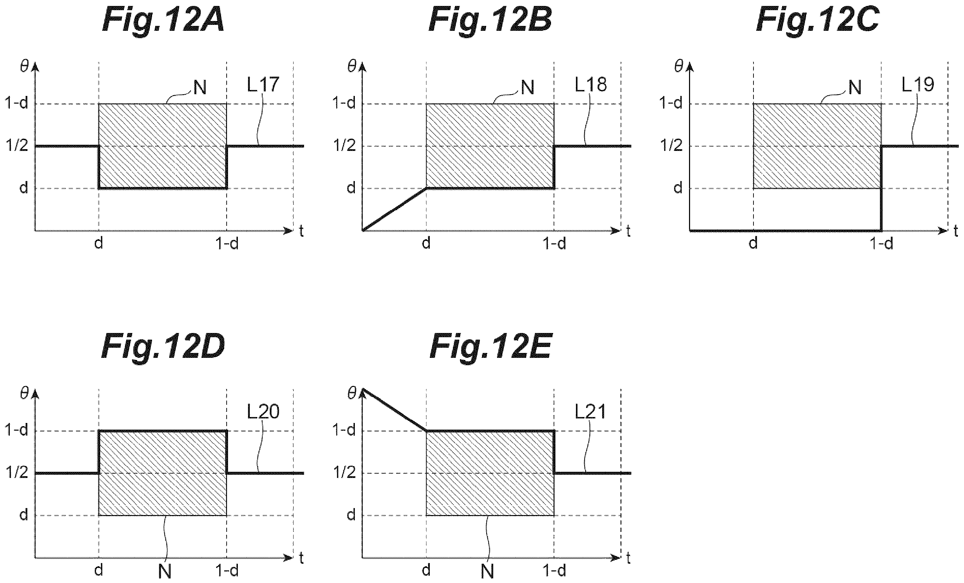

As illustrated in FIG. 12A, the setting unit 72 may maintain the phase difference θ at 1/2 in a relationship of t < d, may set the phase difference θ to any value from d to 1/2 in a case of t = d, may maintain the phase difference θ at d in the relationship of d < t < (1 - d), may set the phase difference θ to any value from d to 1/2 in a case of t = (1 - d), and may maintain the phase difference θ at 1/2 in a relationship of t > (1 - d) (line L17).

As illustrated in FIG. 12B, the setting unit 72 may gradually increase the phase difference θ up to d in correspondence with an increase in the pulse width t in the relationship of t < d, may maintain the phase difference θ at d in the relationship of d < t < (1 - d), may set the phase difference θ to any value from d to 1/2 in the case of t = (1 - d), and may maintain the phase difference θ at 1/2 in the relationship of t > (1 - d) (line L18).

As illustrated in FIG. 12C, the setting unit 72 may maintain the phase difference θ at a value smaller than d in the relationship of t < (1-d), may set the phase difference θ to any value from the value of the phase difference θ in the relationship of t < (1-d) to 1/2 in the case of t = (1 - d), and may maintain the phase difference θ at 1/2 in the relationship of t > (1 - d) (line L19).

As illustrated in FIG. 12D, the setting unit 72 may maintain the phase difference θ at 1/2 in the relationship of t < d, may set the phase difference θ to any value from 1/2 to (1 - d) in the case of t = d, may maintain the phase difference θ at (1 - d) in the relationship of d < t < (1 - d), may set the phase difference θ to any value from 1/2 to (1 - d) in the case of t = (1 - d), and may maintain the phase difference θ at 1/2 in the relationship of t > (1 - d) (line L20).

As illustrated in FIG. 12E, the setting unit 72 may gradually decrease the phase difference θ up to (1 - d) in correspondence with an increase in the pulse width t in the relationship of t < d, may maintain the phase difference θ at (1 - d) in the case of d < t < (1 - d), may set the phase difference θ to any value from 1/2 to (1 - d) in the case of t = (1 - d), and may maintain the phase difference θ at 1/2 in the relationship of t > (1 - d) (line L21).

As described above, according to the electric machine system of the second embodiment, it is possible to suppress deterioration of the performance of the electric machine 2 as in the electric machine system 1 of the first embodiment.

A difference between the pulse width t of the first signal S1 and the pulse width s of the second signal S2 may be equal to or less than the permissible value d. In other words, the output unit 71 may output the first signal S1 and the second signal S2 so that the difference between the pulse width t of the first signal S1 and the pulse width s of the second signal S2 becomes equal to or less than the permissible value d. According to this, the width R of the non-overlapping region is prevented from being larger than the permissible value d.

In a case where each of the pulse width t of the first signal S1 and the pulse width s of the second signal S2 is a half pulse period, the setting unit 72 may set the phase difference θ so that the phase difference θ does not become the half pulse period. According to this, the width R of the non-overlapping region is prevented from being larger than the permissible value d.

In a case where the pulse width t of the first signal S1 is larger than the permissible value d, and is smaller than a difference between the total pulse period of the first signal S1 and the permissible value d, the setting unit 72 may set the phase difference θ so that the phase difference θ does not become a value which is larger than the permissible value d and smaller than the difference between the total pulse period of the first signal S1 and the permissible value d. According to this, the width R of the non-overlapping region is prevented from being larger than the permissible value d.

In a case where the pulse width t of the first signal S1 is equal to or more than the difference between the total pulse period and the permissible value d, the setting unit 72 may set the phase difference θ to the half pulse period. In addition, in a case where the pulse width s of the second signal S2 is equal to or more than the difference between the total pulse period and the permissible value d, the setting unit 72 may set the phase difference θ to the half pulse period. In a case where the pulse width s of the second signal S2 is equal to or more than the difference between the total pulse period and the permissible value d, the pulse interval of the second signal S2 becomes equal to or less than the permissible value d, and as a result, the width of the non-overlapping region that does not overlap the pulse of the second signal S2 in the pulse of the first signal S1 becomes equal to or less than the permissible value d. In this case, the phase difference θ may be set to the maximum value, that is, the half pulse period. In other words, in a case where the pulse interval of the second signal S2 is equal to or less than the permissible value d, the setting unit 72 may set the phase difference θ to the half pulse period. In these cases, since the width R of the non-overlapping region does not become larger than the permissible value d, even when the overcurrent has been generated, the overcurrent is within a permissible range. Accordingly, it is possible to suppress the ripple by maximizing the phase difference θ.

In a case where the pulse width t of the first signal S1 is within the first range R1, the setting unit 72 may not change the phase difference θ in correspondence with the variation of the pulse width t (first duty ratio). According to this, it is possible to set the phase difference θ flexibly in correspondence with various situations.

The first range R1 may include the half pulse period. According to this, it is possible to set the phase difference θ flexibly in correspondence with various situations.

The setting unit 72 may increase the phase difference θ in correspondence with an increase in the pulse width t in a case where the pulse width t of the first signal S1 is within the second range R2, and may decrease the phase difference θ in correspondence with an increase in the pulse width t in a case where the pulse width t of the first signal S1 is within the third range R3. According to this, it is possible to set the phase difference θ flexibly in correspondence with various situations.

In a case where the pulse width t of the first signal S1 is within the second range R2, the setting unit 72 may rapidly increase the phase difference θ in correspondence with an increase in the pulse width t. According to this, it is possible to set the phase difference θ flexibly in correspondence with various situations.

The setting unit 72 changes the phase difference θ so that an increase rate of the phase difference θ becomes the maximum value in a case where the pulse width t of the first signal S1 is within the second range R2. According to this, it is possible to set the phase difference θ flexibly in correspondence with various situations.

Hereinbefore, the embodiments of the present disclosure have been described, but the present disclosure is not limited to the embodiments described above.

An example in which the first duty ratio and the second duty ratio are the same as each other has been described, but the first duty ratio and the second duty ratio may be different from each other. Specifically, the pulse width W1 of the first signal S1 and the pulse width W2 of the second signal S2 may be different from each other. The pulse interval D1 of the first signal S1 and the pulse interval D2 of the second signal S2 may be different from each other. As an example, the pulse width W2 may be larger than the pulse width W1. The pulse interval D2 may be smaller than the pulse interval D1. According to the electric machine system 1, even in this case, it is possible to realize suppression of the current ripple and generation of the overcurrent.

The setting unit 72 may change the phase difference θ in correspondence with the variation of the magnitude of any one of the first current and the second current. That is, the setting unit 72 may change the phase difference θ in correspondence with the variation of the magnitude of at least one of the first current and the second current. The setting unit 72 may change the phase difference θ in correspondence with the variation of any one of the first duty ratio and the second duty ratio. That is, the setting unit 72 may change the phase difference θ in correspondence with the variation of at least one of the first duty ratio and the second duty ratio.

The phase difference θ between the first signal S1 and the second signal S2 may be 0 degrees. That is, the setting unit 72 may change the phase difference θ in correspondence with the variation of the magnitude of the first current and the second current, and the magnitude of the phase difference θ is not particularly limited.

An example in which the electric machine 2 is the electric motor has been described, but the electric machine 2 may be a generator. In this case, the storage battery (the power source 3 of the embodiments) functions as a load. A rotator of the generator is rotated by driving of, for example, an engine or the like. A current flows through the first winding set 21 and the second winding set 22 of the stator due to operation of a magnetic field of the rotator. The electric machine 2 outputs an AC current. Each of the first power converter 5 and the second power converter 6 functions as a converter. The controller 7 controls output of the first current with respect to the first winding set 21 and output of the second current with respect to the second winding set 22. The output unit 71 outputs a first signal for outputting the first current and a second signal for outputting the second current.

The stator may further include a third winding set provided in the same teeth in addition to the first winding set 21 and the second winding set 22. The stator includes two or more winding sets.

### Reference Signs List

1: electric machine system, 2: electric machine, 7: controller, 21: first winding set, 22: second winding set, 71: output unit, 72: setting unit, D1, D2: pulse interval, R: width of non-overlapping region, R1: first range, R2: second range, R3: third range, S1: first signal, S2: second signal, W1, W2, t, s: pulse width, θ: phase difference.

## Claims

1. An electric machine system, comprising:
an electric machine comprising a stator that comprises a first winding set and a second winding set, and a rotator that comprises a magnet and is rotatable with respect to the stator; and
a controller configured to control input and output of a first voltage with respect to the first winding set, and input and output of a second voltage with respect to the second winding set,
wherein the controller comprises:
an output unit configured to output a first signal for the input and output of the first voltage, and a second signal for the input and output of the second voltage, and
a setting unit configured to set a phase difference between the first signal and the second signal, and
wherein the setting unit changes the phase difference in correspondence with a variation of a magnitude of at least one of a first current flowing through the first winding set, and a second current flowing through the second winding set.

2. The electric machine system according to claim 1,
wherein the first signal and the second signal are pulse signals,
wherein a magnitude of the first current varies in correspondence with a proportion occupied by a pulse width of the first signal in a total pulse period of the first signal,
wherein a magnitude of the second current varies in correspondence with a proportion occupied by a pulse width of the second signal in a total pulse period of the second signal, and
wherein the setting unit is configured to change the phase difference in correspondence with a variation of at least one of the pulse width of the first signal and the pulse width of the second signal.

3. The electric machine system according to claim 2,
wherein the setting unit is configured to set the phase difference so that a width of a non-overlapping region that does not overlap a pulse of the second signal in a pulse of the first signal does not become larger than a predetermined permissible value.

4. The electric machine system according to claim 3,
wherein the permissible value is obtained by multiplying a value, which is obtained by dividing a difference between a maximum repetitive peak collector current and a rated current of a transistor forming a power converter connected to the electric machine by a difference between a power source voltage and an induced voltage, by leakage inductance between the first winding set and the second winding set.

5. The electric machine system according to claim 3 or 4,
wherein a difference between the pulse width of the first signal and the pulse width of the second signal is equal to or less than the permissible value.

6. The electric machine system according to any one of claims 3 to 5,
wherein in a case where each of the pulse width of the first signal and the pulse width of the second signal is a half pulse period, the setting unit is configured to set the phase difference so that the phase difference does not become the half pulse period.

7. The electric machine system according to any one of claims 3 to 5,
wherein in a case where the pulse width of the first signal is larger than the permissible value and is smaller than a difference between the total pulse period of the first signal and the permissible value, the setting unit is configured to set the phase difference so that the phase difference does not become a value which is larger than the permissible value and smaller than the difference between the total pulse period of the first signal and the permissible value.

8. The electric machine system according to any one of claims 3 to 5,
wherein in a case where a pulse interval of the second signal is equal to or less than the permissible value, the setting unit is configured to set the phase difference to a half pulse period.

9. The electric machine system according to any one of claims 3 to 5,
wherein in a case where the pulse width of the first signal is equal to or more than a difference between the total pulse period and the permissible value, the setting unit is configured to set the phase difference to a half pulse period.

10. The electric machine system according to any one of claims 3 to 5,
wherein in a case where the pulse width of the first signal is equal to or less than the permissible value, the setting unit is configured to set the phase difference to a half pulse period.

11. The electric machine system according to any one of claims 2 to 10,
wherein the proportion occupied by the pulse width of the first signal in the total pulse period of the first signal and the proportion occupied by the pulse width of the second signal in the total pulse period of the second signal are the same as each other.

12. The electric machine system according to claim 11,
wherein in a case where the pulse width of the first signal is within a first range, the setting unit does not change the phase difference in correspondence with a change in the pulse width of the first signal.

13. The electric machine system according to claim 12,
wherein the first range includes a half pulse period.

14. The electric machine system according to any one of claims 11 to 13,
wherein the setting unit is configured to increase the phase difference in correspondence with an increase in the pulse width of the first signal in a case where the pulse width of the first signal is within a second range, and decreases the phase difference in correspondence with the increase in the pulse width of the first signal in a case where the pulse width of the first signal is within a third range.

15. The electric machine system according to claim 14,
wherein in a case where the pulse width of the first signal is within the second range, the setting unit is configured to rapidly increase the phase difference in correspondence with the increase in the pulse width of the first signal.

16. The electric machine system according to claim 14 or 15,
wherein in a case where the pulse width of the first signal is within the second range, the setting unit is configured to change the phase difference so that an increase rate of the phase difference becomes a maximum value.

17. A controller configured to control input and output of a first voltage with respect to a first winding set and input and output of a second voltage with respect to a second winding set, comprising:
an output unit configured to output a first signal for input and output of the first voltage, and a second signal for input and output of the second voltage; and
a setting unit configured to set a phase difference between the first signal and the second signal,
wherein the setting unit changes the phase difference in correspondence with a variation of a magnitude of at least one of a first current flowing through the first winding set, and a second current flowing through the second winding set.
